# FASCICULE DE BREVET EUROPEEN

(11) **EP 3 422 239 B1**
(45) Date de publication et mention de la délivrance du brevet: **05.02.2020**
(21) Numéro de dépôt: 18179657.4
(22) Date de dépôt: 25.06.2018
(51) Int. Cl.: G06F 21/57, G06F 21/44

(54) **PROCÉDÉS DE PARTAGE ET D'UTILISATION D'UN SECRET**
VERFAHREN ZUR TEILUNG UND GEMEINSAMEN NUTZUNG EINES GEHEIMNISSES
METHODS FOR SHARING AND USING A SECRET

(30) Priorité: 29.06.2017 FR 1755988
(43) Date de publication de la demande: 02.01.2019
(73) Titulaire: Sagemcom Energy & Telecom SAS, 92500 Rueil-Malmaison (FR)
(72) Inventeur: LECAPPON, Jean-Paul, 92500 Rueil Malmaison (FR); LECOCQ, Guillaume, 92500 Rueil Malmaison (FR)
(74) Mandataire: Cabinet Le Guen Maillet

(56) Documents cités:
- WO-A1-2006/106250
- WO-A1-2013/142943
- US-A1- 2014 006 801

## Description

La présente invention concerne un partage de secret par un premier dispositif avec un second dispositif.

Le document WO2006/106250 A1 décrit la création d'un lien sécurisé entre un dispositif de traitement de données et un module de sécurité. Le dispositif de traitement de données est apte à communiquer avec un module de sécurité qui stocke au moins une donnée secrète nécessaire à l'exécution, par le dispositif, d'une tâche informatique.

Dans le cadre d'une introduction de logiciel dans un parc de dispositifs dans un environnement considéré comme non fiable, comme cela pourrait être le cas dans une usine de production ou lorsque les dispositifs en question ont été déployés sur le terrain, il est souhaitable de s'assurer que le logiciel introduit n'a pas été modifié ou n'est pas sujet à un espionnage par un logiciel ou dispositif tiers. En effet, des données secrètes peuvent être amenées à être insérées dans ces dispositifs de façon sécurisée, et ces données, de par leur nature, doivent rester secrètes.

Il est alors souhaitable de pallier ces inconvénients de l'état de la technique, et notamment de permettre une insertion de secrets dans des dispositifs, localisés ou ayant transité dans un environnement considéré comme non fiable, uniquement dans le cas où le logiciel introduit est authentique (c'est-à-dire authentifiable mais pas encore authentifié).

A cet effet, l'invention concerne un procédé de partage d'un secret par un premier dispositif avec un second dispositif, le secret étant transmis par le premier dispositif à destination du second dispositif sous forme chiffrée grâce à une clef de chiffrement symétrique, le second dispositif étant supposé stocker un logiciel prédéfini. Le procédé est tel que le premier dispositif effectue les étapes suivantes : obtenir une liste d'adresses aléatoires parmi un ensemble d'adresses correspondant au logiciel que le second dispositif est supposé stocker, et récupérer le contenu supposé des adresses aléatoires de ladite liste, en utilisant un logiciel de référence correspondant au logiciel que le second dispositif est supposé stocker ; calculer la clef de chiffrement symétrique, en appliquant une fonction de hachage prédéfinie sur le contenu récupéré ; et transmettre à destination du second dispositif, en plus du secret chiffré grâce à la clef de chiffrement calculée, la liste d'adresses aléatoires. Ainsi, le secret peut être obtenu par déchiffrement uniquement si le second dispositif stocke effectivement le logiciel attendu.

Selon un mode de réalisation particulier, la liste d'adresses aléatoires contient en outre d'autres adresses aléatoires correspondant à des zones mémoire où le second dispositif est supposé stocker des données prédictibles, le premier dispositif récupère par prédiction le contenu desdites autres adresses aléatoires, et la clef de chiffrement symétrique est calculée en appliquant la fonction de hachage prédéfinie en outre sur le contenu récupéré à ces dites autres adresses aléatoires.

Selon un mode de réalisation particulier, le premier dispositif calcule la clef de chiffrement symétrique, en appliquant en outre la fonction de hachage prédéfinie sur un aléa, et le premier dispositif transmet l'aléa au second dispositif.

Selon un mode de réalisation particulier, le premier dispositif obtient la liste d'adresses aléatoires par tirage aléatoire parmi un sous-ensemble de toutes les adresses correspondant au logiciel que le second dispositif est supposé stocker.

Selon un mode de réalisation particulier, le premier dispositif est un serveur, dit serveur de contrôle, connecté par un premier lien de communication à un autre serveur, dit serveur de production, qui sert de relais avec le second dispositif qui est un terminal que le serveur de production doit configurer grâce à un second lien de communication.

Selon une variante de réalisation, le premier dispositif inclut un module matériel de sécurité, fournisseur du secret, et le second dispositif inclut un module client, destinataire du secret, supposé s'authentifier auprès dudit module matériel de sécurité.

L'invention concerne également un procédé d'utilisation par un second dispositif d'un secret reçu en provenance d'un premier dispositif, le secret étant reçu par le second dispositif sous forme chiffrée grâce à une clef de chiffrement symétrique, le second dispositif étant supposé stocker un logiciel prédéfini. Le procédé est tel que le second dispositif effectue les étapes suivantes : recevoir, en plus du secret sous forme chiffrée, une liste d'adresses aléatoires parmi un ensemble d'adresses correspondant au logiciel que le second dispositif est supposé stocker, et récupérer le contenu des adresses aléatoires de ladite liste, en utilisant le logiciel effectivement stocké par le second dispositif ; calculer la clef de chiffrement symétrique, en appliquant une fonction de hachage prédéfinie sur le contenu récupéré ; et récupérer le secret, en déchiffrant grâce à la clef de chiffrement calculée le secret reçu sous forme chiffrée.

Selon un mode de réalisation particulier, la liste d'adresses aléatoires contient en outre d'autres adresses aléatoires correspondant à des zones mémoire où le second dispositif est supposé stocker des données prédictibles, et la clef de chiffrement symétrique est calculée en appliquant la fonction de hachage prédéfinie en outre sur le contenu récupéré à ces dites autres adresses aléatoires.

Selon un mode de réalisation particulier, le second dispositif reçoit en outre un aléa en provenance du premier dispositif, et le second dispositif calcule la clef de chiffrement symétrique, en appliquant en outre la fonction de hachage prédéfinie sur l'aléa.

Selon un mode de réalisation particulier, le premier dispositif est un serveur, dit serveur de contrôle, connecté par un premier lien de communication à un autre serveur, dit serveur de production, qui sert de relais avec le second dispositif qui est un terminal que le serveur de production doit configurer grâce à un second lien de communication.

Selon un mode de réalisation particulier, le premier dispositif inclut un module matériel de sécurité, fournisseur du secret, et le second dispositif inclut un module client, destinataire du secret, supposé s'authentifier auprès dudit module matériel de sécurité.

Selon un mode de réalisation particulier, le second dispositif retourne le secret déchiffré à destination du premier dispositif.

Selon un mode de réalisation particulier, le second dispositif applique une fonction prédéfinie sur le secret déchiffré afin d'obtenir un secret modifié et transmet le secret modifié à destination du premier dispositif.

L'invention concerne également un procédé de partage d'un secret par un premier dispositif avec un second dispositif, tel que le premier dispositif et le second dispositif se comportent mutuellement comme mentionné ci-dessus.

L'invention concerne également un dispositif, dit premier dispositif, configuré pour partager un secret avec un second dispositif, le premier dispositif comportant des moyens pour transmettre le secret à destination du second dispositif sous forme chiffrée grâce à une clef de chiffrement symétrique, le second dispositif étant supposé stocker un logiciel prédéfini. Le premier dispositif est tel qu'il comporte : des moyens pour obtenir une liste d'adresses aléatoires parmi un ensemble d'adresses correspondant au logiciel que le second dispositif est supposé stocker, et pour récupérer le contenu supposé des adresses aléatoires de ladite liste, en utilisant un logiciel de référence correspondant au logiciel que le second dispositif est supposé stocker ; des moyens pour calculer la clef de chiffrement symétrique, en appliquant une fonction de hachage prédéfinie sur le contenu récupéré ; et des moyens pour transmettre à destination du second dispositif, en plus du secret chiffré grâce à la clef de chiffrement calculée, la liste d'adresses aléatoires.

L'invention concerne également un dispositif, dit second dispositif, configuré pour utiliser un secret reçu en provenance d'un premier dispositif, le secret étant reçu par le second dispositif sous forme chiffrée grâce à une clef de chiffrement symétrique, le second dispositif étant supposé stocker un logiciel prédéfini. Le second dispositif est tel qu'il comporte : des moyens pour recevoir, en plus du secret sous forme chiffrée, une liste d'adresses aléatoires parmi un ensemble d'adresses correspondant au logiciel que le second dispositif est supposé stocker, et pour récupérer le contenu des adresses aléatoires de ladite liste, en utilisant le logiciel effectivement stocké par le second dispositif ; des moyens pour calculer la clef de chiffrement symétrique, en appliquant une fonction de hachage prédéfinie sur le contenu récupéré ; et des moyens pour récupérer le secret, en déchiffrant grâce à la clef de chiffrement calculée le secret reçu sous forme chiffrée.

L'invention concerne également un système comportant un premier dispositif tel que mentionné ci-dessus et un second dispositif tel que mentionné ci-dessus.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également un support de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1A illustre schématiquement un premier contexte dans lequel l'invention peut être implémentée ;
- la Fig. 1B illustre schématiquement un second contexte dans lequel l'invention peut être implémentée ;
- la Fig. 2 illustre schématiquement un exemple d'architecture matérielle d'un dispositif du contexte de la Fig. 1A ou de la Fig. 1B ;
- la Fig. 3 illustre schématiquement un algorithme implémenté par un premier dispositif pour transmettre un secret à un second dispositif ;
- la Fig. 4 illustre schématiquement un algorithme implémenté par un troisième dispositif servant de relais entre le premier dispositif et le second dispositif ; et
- la Fig. 5 illustre schématiquement un algorithme implémenté par le second dispositif pour recevoir le secret transmis par le premier dispositif.

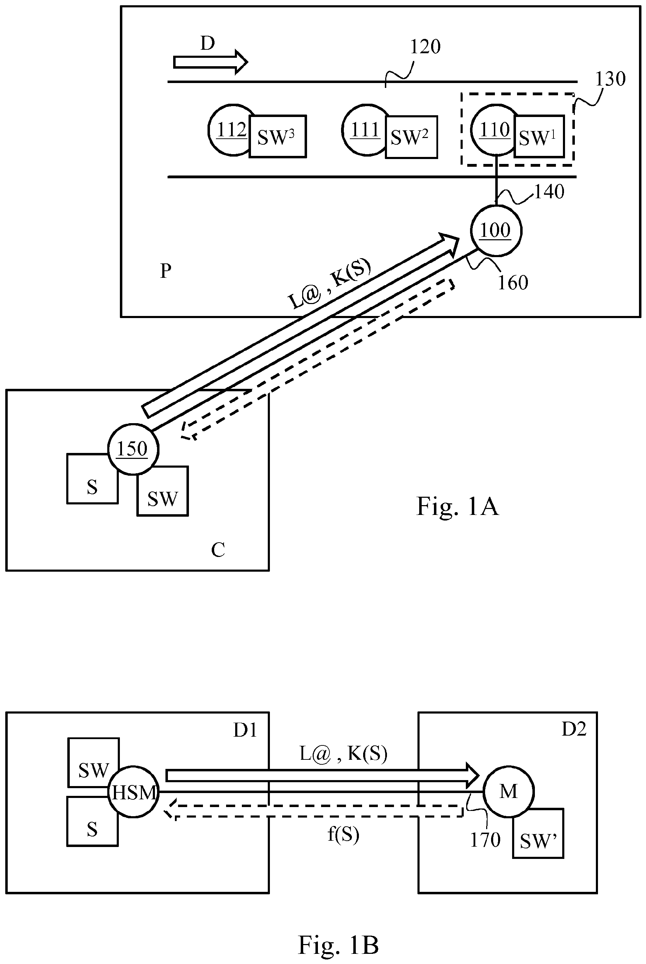

La **Fig. 1A** illustre schématiquement un premier contexte dans lequel l'invention peut être implémentée. Dans ce premier contexte, un serveur de contrôle 150 est installé dans un site de contrôle C. Le serveur de contrôle 150 est configuré pour partager un secret S avec des terminaux 110, 111, 112 produits sur un site de production P. Un lien de communication 160 est établi entre le serveur de contrôle 150 et un serveur de production 100 installé dans le site de production P, afin de permettre au serveur de contrôle 150 et au serveur de production 100 d'échanger des données et informations. Le lien de communication 160 peut être établi sur l'Internet grâce à un routage de type IP (« Internet Protocol » en anglais, tel que décrit dans le document normatif RFC 791), sur un support de communication filaire, optique ou sans-fil. Par exemple, ce support de communication est à courants porteurs en ligne PLC (« PowerLine Communications » en anglais).

Le site de production P comporte une ligne de production 120 où les terminaux 110, 111, 112 sont présentés pour configuration par le serveur de production 100. La ligne de production 120 comporte une zone de configuration 130. La zone de configuration 130 comporte une interface (non représentée sur la Fig. 1A) permettant de connecter au serveur de production 100 chaque terminal situé dans ladite zone de configuration 130, par le biais d'un lien de communication 140. Le lien de communication 140 peut être établi sur un support de communication filaire, optique ou sans-fil. Par exemple, ce support de communication est une tête optique avec interface RS232 pour connexion au serveur de production 100.

Les terminaux 110, 111, 112 sont ainsi successivement amenés (selon la direction D représentée sur la Fig. 1A) dans la zone de configuration 130, afin de permettre au serveur de production 100 de configurer lesdits terminaux 110, 111, 112. Le serveur de production 100 configure les terminaux 110, 111, 112, et leur fournit notamment, sous forme chiffrée, le secret S que le serveur de contrôle 150 a transmis au serveur de production 100 à destination des terminaux 110, 111, 112. Le serveur de production 100 sert ainsi de relais entre le serveur de contrôle 150 et les terminaux 110, 111, 112 produits sur le site de production P.

Le serveur de contrôle 150 dispose d'un logiciel de référence SW, soit stocké dans une mémoire interne, soit stocké dans une mémoire externe à laquelle le serveur de contrôle 150 a accès. Ce logiciel de référence SW est supposé avoir été installé au sein de mémoires non volatiles des terminaux 110, 111, 112 avant que lesdits terminaux 110, 111, 112 ne se retrouvent sur la ligne de production 120, et plus particulièrement avant que lesdits terminaux 110, 111, 112 ne se retrouvent dans la zone de configuration 130. Ainsi, en arrivant dans la zone de configuration 130, le terminal 110 stocke un logiciel SW¹ supposé être identique au logiciel de référence SW, le terminal 111 stocke un logiciel SW² supposé être identique au logiciel de référence SW, et le terminal 112 stocke un logiciel SW³ supposé être identique au logiciel de référence SW.

Afin de s'assurer que les terminaux 111, 112, 113 ne sont pas frauduleux, le serveur de contrôle 150 transmet le secret S sous forme chiffrée K(S), grâce à une clef de chiffrement symétrique K définie au moins en s'appuyant sur le logiciel de référence SW. Plus particulièrement, cette clef de chiffrement symétrique K est définie au moins grâce au contenu du logiciel à une liste L@ d'adresses aléatoires. Outre le secret S sous forme chiffrée K(S), le serveur de contrôle 150 transmet la liste L@ d'adresses aléatoires au serveur de production 100, qui les relaie aux terminaux 111, 112, 113 lorsque lesdits terminaux 111, 112, 113 passent dans la zone de configuration 130. Si les logiciels SW1, SW2 et SW3 stockés respectivement par les terminaux 111, 112, 113 sont effectivement conformes au logiciel de référence SW, les terminaux 111, 112, 113 sont aptes à déchiffrer correctement le secret S. Un aléa X peut être ajouté dans le processus, comme décrit ci-après.

De plus, la liste L@ d'adresses aléatoires peut contenir en outre d'autres adresses aléatoires correspondant à des zones mémoire où les terminaux 110, 111, 112 sont supposés stocker des données prédictibles. De telles données prédictibles sont par exemple des données dont les valeurs sont supposées être représentatives d'une zone mémoire inutilisée (par exemple, tous les bits de cette zone mémoire à « 0 » ou tous les bits de cette zone mémoire à « 1 »). De telles données prédictibles sont, selon un autre exemple, des données dont les valeurs peuvent différer d'un terminal à l'autre, mais que le serveur de contrôle 150 est capable de connaître à l'avance. Considérons le cas où une zone mémoire prédéfinie (donc à une adresse prédéfinie ou à un ensemble d'adresses prédéfinies) de chaque terminal est supposée stocker un identifiant unique associé audit terminal. Alors, le serveur de contrôle 150 peut échanger avec ledit terminal via le serveur de production 100 afin d'obtenir sur requête l'identifiant unique du terminal auquel le secret S est destiné. Le serveur de contrôle 150 a ainsi connaissance, avant d'effectuer le chiffrement du secret S, du contenu supposé de cette zone mémoire où ledit terminal est supposé stocker son identifiant unique. Outre les adresses aléatoires référant au logiciel que chaque terminal est supposé stocker, la liste L@ d'adresses aléatoires peut ainsi contenir des adresses référant à tout ou partie de cette zone mémoire où est supposé être stocké l'identifiant unique dudit terminal.

La **Fig. 1B** illustre schématiquement un second contexte dans lequel l'invention peut être implémentée.

Un premier dispositif D1 comporte un module matériel de sécurité HSM (« Hardware Security Module » en anglais). Ce module matériel de sécurité HSM stocke le secret S et est configuré pour partager le secret S avec un module client M d'un second dispositif D2 via un lien de communication 170. Ce lien de communication 170 est par exemple de type USB (« Universal Serial Bus » en anglais). Le module matériel de sécurité HSM peut être le premier dispositif D1 lui-même.

Dans un mode préférentiel, le module matériel de sécurité HSM est fournisseur du secret, et le module client M, destinataire du secret, est supposé s'authentifier auprès dudit module matériel de sécurité HSM.

Le module matériel de sécurité HSM et le module client M peuvent être présents dans un même appareil et être aptes à communiquer entre eux par un lien de communication interne audit appareil. Le lien de communication 170 est alors par exemple de type I²C (« Inter-Integrated Circuit » en anglais). Le module client M peut être un module matériel. Le module client M peut alors être le second dispositif D2 lui-même. Le module client M peut aussi être un module logiciel exécuté par un processeur qui inclut, ou auquel est adjointe, une mémoire non volatile pour stocker le logiciel SW' et qui constitue donc le second dispositif D2.

Le module matériel de sécurité HSM stocke aussi le logiciel de référence SW, ou a accès au logiciel de référence SW lorsqu'il est stocké ailleurs au sein du premier dispositif D1. Ce logiciel de référence SW est supposé avoir été installé au sein du second dispositif D2 et être à disposition du module client M, préférentiellement intégré au module client M. Ainsi, le module client M dispose d'un logiciel SW' supposé être identique au logiciel de référence SW.

Afin de s'assurer que le module client M n'est pas frauduleux, le module matériel de sécurité HSM transmet le secret S sous forme chiffrée K(S), grâce à la clef de chiffrement symétrique K définie au moins en s'appuyant sur le contenu du logiciel de référence SW. Comme précédemment, cette clef de chiffrement symétrique K est définie au moins grâce au contenu du logiciel de référence SW à une liste L@ d'adresses aléatoires. Outre le secret S sous forme chiffrée K(S), le module matériel de sécurité HSM transmet la liste L@ d'adresses aléatoires au module client M. Si le logiciel SW' est effectivement conforme au logiciel de référence SW, le module client M est apte à déchiffrer correctement le secret S ; sinon le déchiffrement donne une valeur erronée du secret S. Un aléa X peut être ajouté dans le processus, comme décrit ci-après.

De plus, comme dans le contexte de la Fig. 1A, la liste L@ d'adresses aléatoires peut contenir en outre d'autres adresses aléatoires correspondant à des zones mémoire où le second dispositif D2 est supposé stocker des données prédictibles.

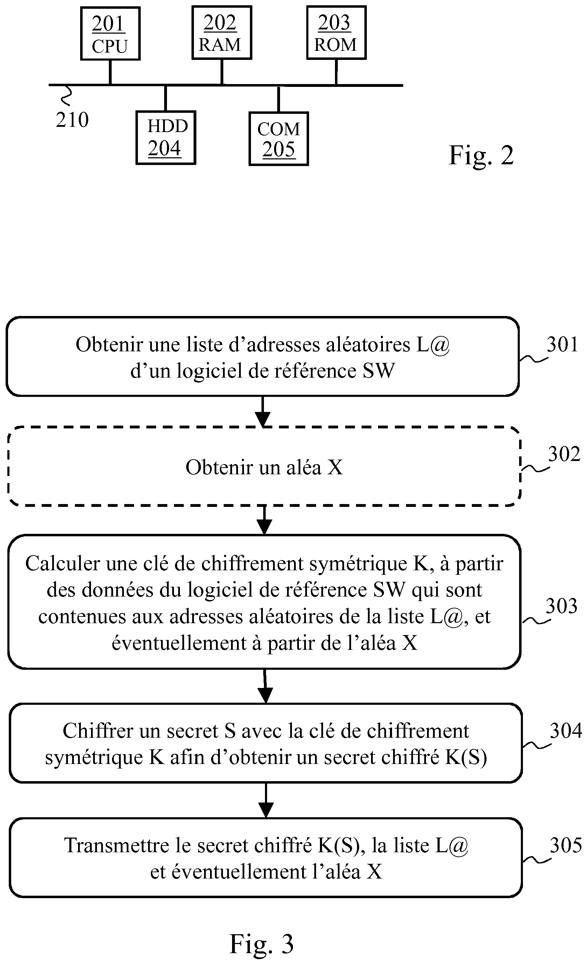

La **Fig. 2** illustre schématiquement un exemple d'architecture matérielle des terminaux 110, 111, 112 et/ou du serveur de contrôle 150 et/ou du serveur de production 100 et/ou du premier dispositif D1 et/ou du second dispositif D2. Considérons à titre illustratif que la Fig. 2 représente schématiquement l'architecture du serveur de contrôle 150.

Le serveur de contrôle 150 comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) ou un disque dur HDD (« Hard Disk Drive » en anglais) 204 ; et au moins une interface de communication COM 205.

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le serveur de contrôle 150 est mis sous tension, le processeur 201 est capable de lire de la RAM 202 des instructions et de les exécuter. Ces instructions forment un programme d'ordinateur causant la mise en œuvre, par le processeur 201, de tout ou partie du comportement décrit dans les algorithmes présentés ici vis-à-vis du serveur de contrôle 150. Le même principe s'applique aux terminaux 110, 111, 112, au serveur de production 100, ainsi qu'au premier dispositif D1 et au second dispositif D2.

Tout ou partie du comportement décrit dans les algorithmes présentés ici peut ainsi être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). Il convient de noter plus particulièrement que le module client M peut ainsi être implémenté sous forme logicielle et/ou sous forme matérielle.

La **Fig. 3** illustre schématiquement un algorithme implémenté par un dispositif pour transmettre le secret S à un autre dispositif. Dans le contexte de la Fig. 1A, l'algorithme de la Fig. 3 est implémenté par le serveur de contrôle 150. Dans le contexte de la Fig. 1B, l'algorithme de la Fig. 3 est implémenté par le premier dispositif D1 et plus particulièrement par le module matériel de sécurité HSM. Considérons à titre illustratif que l'algorithme de la Fig. 3 est implémenté par le serveur de contrôle 150.

Dans une étape 301, le serveur de contrôle 150 obtient la liste L@ d'adresses aléatoires. Chaque adresse de la liste L@ d'adresses aléatoires pointe ainsi sur une portion du contenu du logiciel de référence SW. Le serveur de contrôle 150 tire aléatoirement parmi les adresses qui représentent le logiciel supposé être stocké par le dispositif auquel le secret S est destiné, *i.e.* le terminal dans la zone de configuration 130 si ledit terminal n'est pas frauduleux. Le serveur de contrôle 150 peut exclure des zones mémoire de ce tirage aléatoire, et plus particulièrement des zones mémoire contenant des données qui sont susceptibles de varier d'un dispositif destinataire du secret S à l'autre. En d'autres termes, le serveur de contrôle 150 utilise pour le tirage aléatoire un sous-ensemble de toutes les adresses correspondant au logiciel que les terminaux 110, 111, 112 sont supposés stocker.

Dans un mode de réalisation particulier, un sous-ensemble de la liste L@ d'adresses aléatoires pointe sur des zones mémoire en dehors du logiciel de référence SW mais dont le contenu est prédictible au vu du dispositif auquel le secret est déterminé. Par exemple, dans le contexte de la Fig. 1A, les terminaux 110, 111, 112 sont supposés avoir été configurés, dans le cadre d'un déploiement du logiciel de référence SW, avec des zones mémoire contenant des valeurs par défaut prédéfinies (par exemple, tous les bits de ces zones mémoire à « 0 » ou tous les bits de ces zones mémoire à « 1 »). Cela permet de détecter qu'un logiciel complémentaire a été installé sur un terminal à l'insu du serveur de contrôle 150.

Ainsi, le serveur de contrôle 150 récupère le contenu supposé de la liste L@ d'adresses aléatoires, en utilisant le logiciel de référence SW, et éventuellement le caractère prédictible des zones mémoire contenant lesdites valeurs prédéfinies.

Dans une étape optionnelle 302, le serveur de contrôle 150 obtient un aléa X. L'aléa X permet d'effectuer un salage au moment du chiffrement ultérieur des données récupérées à l'étape 301 aux adresses aléatoires de la liste L@. Le salage est une méthode renforçant la sécurité des données à chiffrer en y adjoignant une donnée supplémentaire, aléatoire, afin d'empêcher que deux informations identiques conduisent à une même empreinte après chiffrement.

Dans une étape 303, le serveur de contrôle 150 calcule la clef de chiffrement symétrique K, à partir des données supposées être contenues, au sein du dispositif auquel le secret S doit être adressé, aux adresses aléatoires de la liste L@. Lorsque l'étape 302 a été effectuée, le serveur de contrôle 150 calcule la clef de chiffrement symétrique K à partir en outre de l'aléa X. Pour ce faire, le serveur de contrôle 150 obtient la clef de chiffrement symétrique K en appliquant une fonction de hachage H prédéfinie sur les données supposées être contenues, au sein du dispositif auquel le secret S doit être adressé, aux adresses aléatoires de la liste L@. Le serveur de contrôle 150 construit la clef de chiffrement symétrique K en s'appuyant donc sur le logiciel de référence SW, éventuellement sur l'aléa X et éventuellement sur des données prédictibles en dehors du logiciel de référence SW.

Dans une étape 304, le serveur de contrôle 150 chiffre le secret S avec la clef de chiffrement symétrique K calculée à l'étape 303.

Dans une étape 305, le serveur de contrôle 150 transmet le secret S sous forme chiffrée K(S) telle qu'obtenue à l'étape 304, ainsi que la liste L@ d'adresses aléatoires. Lorsque l'étape 302 a été effectuée, le serveur de contrôle 150 transmet en outre l'aléa X. Dans le contexte de la Fig. 1A, le serveur de contrôle 150 transmet le secret S, la liste L@ et éventuellement l'aléa X au serveur de production 100, afin que le serveur de contrôle 100 puisse ensuite le relayer au terminal qui est positionné dans la zone de configuration 130. L'algorithme de la Fig. 3 peut être exécuté pour chaque terminal entrant dans la zone de configuration 130, en changeant la liste L@ et/ou l'aléa X en passant d'un terminal à l'autre sur la ligne de production 120. L'algorithme de la Fig. 3 peut en variante être exécuté une seule fois pour une pluralité de terminaux sur la ligne de production. Dans ce cas, la même valeur K(S) et la même liste L@ sont fournies par le serveur de production 100 à tous les terminaux de ladite pluralité. La liste L@ et/ou l'aléa X sont ainsi changés par groupe de terminaux.

Dans le contexte de la Fig. 1B, le premier dispositif D1 et plus particulièrement le module matériel de sécurité HSM transmettent au second dispositif D2, plus particulièrement au module client M, dans l'étape 305, le secret S sous forme chiffrée K(S) telle qu'obtenue à l'étape 304, ainsi que la liste L@ d'adresses aléatoires. Lorsque l'étape 302 a été effectuée, le premier dispositif D1 transmet en outre l'aléa X.

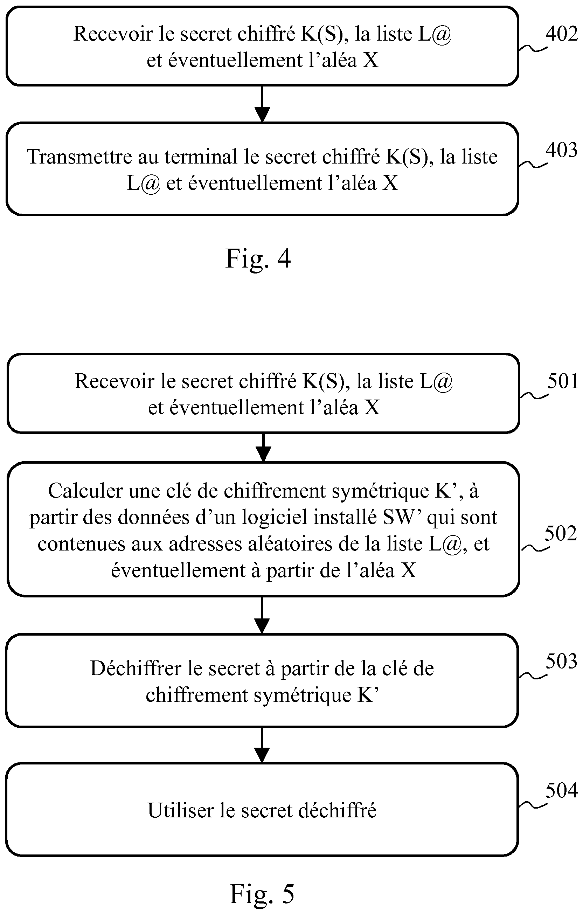

La **Fig. 4** illustre schématiquement un algorithme implémenté par le serveur de production 100 dans le contexte de la Fig. 1A, dans son rôle de relais entre le serveur de contrôle 150 et les terminaux sur la ligne de production 120.

Dans une étape 401, le serveur de production 100 reçoit, en provenance du serveur de contrôle 150, le secret S sous forme chiffrée K(S), ainsi que la liste L@. Le serveur de production 100 reçoit éventuellement en outre l'aléa X. Cette réception fait suite à la transmission effectuée par le serveur de contrôle 150 à l'étape 305.

Dans une étape 402, le serveur de production 100 joue son rôle de relais et transmet au terminal dans la zone de configuration 130 le secret S sous forme chiffrée K(S), ainsi que la liste L@. Si le serveur de production 100 a reçu aussi l'aléa X à l'étape 401, le serveur de production 100 transmet aussi, dans l'étape 402, l'aléa X au terminal dans la zone de configuration 130. Comme déjà évoqué en relation avec la Fig. 3, l'algorithme de la Fig. 4 peut être exécuté pour chaque terminal entrant dans la zone de configuration 130, en changeant la liste L@ et/ou l'aléa X (et donc par voie de conséquence la valeur de la clef K) en passant d'un terminal à l'autre sur la ligne de production 120. L'algorithme de la Fig. 4 peut en variante être exécuté une seule fois pour une pluralité de terminaux sur la ligne de production. Dans ce cas, la même valeur K(S) et la même liste L@ sont transmises par le serveur de production 100 à tous les terminaux de ladite pluralité. La cardinalité de cette pluralité peut être prédéfinie. En variante, le serveur de production 100 change la liste L@ et/ou l'aléa X (et donc par voie de conséquence la valeur K(S)) sur requête du serveur de contrôle 150. La liste L@ et/ou l'aléa X sont ainsi changés par groupes de terminaux.

La **Fig. 5** illustre schématiquement un algorithme implémenté par le dispositif auquel est adressé le secret transmis dans le cadre de l'algorithme de la Fig. 4. Dans le contexte de la Fig. 1A, l'algorithme de la Fig. 5 est implémenté par chacun des terminaux 110, 111, 112 au moment où ledit terminal se trouve dans la zone de configuration. Dans le contexte de la Fig. 1B, l'algorithme de la Fig. 5 est implémenté par le second dispositif D2 et plus particulièrement par le module client M.

Dans une étape 501, le module client M reçoit le secret S sous forme chiffrée K(S), ainsi que la liste L@. Le module client M reçoit éventuellement en outre l'aléa X. Cette réception faite suite à la transmission effectuée par le module matériel de sécurité HSM à l'étape 305. Dans le contexte de la Fig. 1A, cette réception fait suite au relais effectué par le serveur de production 100 à l'étape 402.

Dans une étape 502, le module client M calcule une clef de chiffrement symétrique K' à partir du logiciel SW' dont dispose le module client M et de la liste L@ d'adresses aléatoires, et éventuellement de l'aléa X. Pour ce faire, le module client M obtient la clef de chiffrement symétrique K' en appliquant la fonction de hachage H prédéfinie sur les données contenues aux adresses aléatoires de la liste L@. Le module client M construit la clef de chiffrement symétrique K' en s'appuyant donc sur le logiciel SW', éventuellement sur l'aléa X et éventuellement sur des données prédictibles en dehors du logiciel SW'.

Dans une étape 503, le module client M déchiffre le secret S grâce à la clef de chiffrement symétrique K'. Etant donné que le chiffrement est symétrique, la même clef est utilisée pour le chiffrement et le déchiffrement. Lorsque le logiciel SW' correspond au logiciel de référence SW, et que les données prédictibles sont correctes (lorsque la liste L@ ne réfère pas uniquement à des adresses du logiciel mais aussi à des zones mémoire de contenu prédictible), le module client M déchiffre correctement le secret S. Sinon, le module client M obtient une donnée qui ne correspond pas au secret S.

Dans une étape 504, le module client M utilise le secret S déchiffré à l'étape 503.

Selon un premier mode de réalisation, le secret S sert à fournir au dispositif destinataire du secret S une information qui ne doit pas être connue de dispositifs tiers, et plus particulièrement, qui ne doit pas être connue du serveur de production 100. Le secret S lui-même est alors par exemple une clef de session permettant de poursuivre des communications de manière sécurisée. L'approche décrite en détails ci-dessus évite donc les attaques de l'homme du milieu MITM (« Man-In-The-Middle » en anglais), et évite d'une manière générale qu'un dispositif frauduleux puisse avoir accès au secret S.

Selon un premier mode de réalisation, le secret S sert à authentifier le dispositif destinataire du secret S auprès du dispositif ayant chiffré le secret S. Le dispositif destinataire du secret S peut ainsi retourner le secret S en clair au dispositif ayant chiffré le secret S. L'authentification est confirmée lorsque le secret S correctement déchiffré est retourné ; sinon, l'authentification échoue. Il est alors préférable de modifier le secret S d'un dispositif destinataire à l'autre, pour éviter que le secret S en clair ne soit capté par un dispositif tiers et ne soit réutilisé frauduleusement pour s'authentifier. Une autre approche consiste à retourner le secret S en lui appliquant une fonction prédéfinie *f* afin d'obtenir un secret modifié f(S), comme illustré sur les Figs. 1A et 1B, de manière à ne pas directement transmettre le secret S en clair, tout en assurant la fonction d'authentification. Considérant que le dispositif ayant chiffré le secret S a connaissance de la fonction prédéfinie *f* (et bien sûr du secret S), ledit dispositif ayant chiffré le secret S est capable de retrouver de son côté le secret modifié f(S) réellement attendu et de le comparer avec ce qui lui est retourné.

## Revendications

1. Procédé de partage d'un secret (S) par un premier dispositif (D1, HSM, 150) avec un second dispositif (D2, M, 110), le secret étant transmis par le premier dispositif à destination du second dispositif sous forme chiffrée grâce à une clef de chiffrement symétrique, le second dispositif étant supposé stocker un logiciel prédéfini, **caractérisé en ce que** le premier dispositif effectue les étapes suivantes :
- obtenir (301) une liste d'adresses aléatoires (L@) parmi un ensemble d'adresses correspondant au logiciel que le second dispositif est supposé stocker, et récupérer le contenu supposé des adresses aléatoires de ladite liste, en utilisant un logiciel de référence (SW) correspondant au logiciel que le second dispositif est supposé stocker ;
- calculer (303) la clef de chiffrement symétrique, en appliquant une fonction de hachage prédéfinie sur le contenu récupéré ; et
- transmettre (305) à destination du second dispositif, en plus du secret chiffré (304) grâce à la clef de chiffrement calculée, la liste d'adresses aléatoires.

2. Procédé selon la revendication 1, **caractérisé en ce que** la liste d'adresses aléatoires (L@) contient en outre d'autres adresses aléatoires correspondant à des zones mémoire où le second dispositif (D2, M, 110) est supposé stocker des données prédictibles, **en ce que** le premier dispositif (D1, HSM, 150) récupère par prédiction le contenu desdites autres adresses aléatoires, et **en ce que** la clef de chiffrement symétrique est calculée en appliquant la fonction de hachage prédéfinie en outre sur le contenu récupéré à ces dites autres adresses aléatoires.

3. Procédé selon l'une quelconque des revendications 1 et 2, **caractérisé en ce que** le premier dispositif (D1, HSM, 150) calcule la clef de chiffrement symétrique, en appliquant en outre la fonction de hachage prédéfinie sur un aléa, et **en ce que** le premier dispositif transmet (305) l'aléa au second dispositif.

4. Procédé selon l'une quelconque des revendications 1 à 3, **caractérisé en ce que** le premier dispositif (D1, HSM, 150) obtient la liste d'adresses aléatoires par tirage aléatoire parmi un sous-ensemble de toutes les adresses correspondant au logiciel que le second dispositif (D2, M, 110) est supposé stocker.

5. Procédé selon l'une quelconque des revendications 1 à 4, **caractérisé en ce que** le premier dispositif est un serveur (150), dit serveur de contrôle, connecté par un premier lien de communication (160) à un autre serveur (100), dit serveur de production, qui sert de relais avec le second dispositif qui est un terminal (110) que le serveur de production doit configurer grâce à un second lien de communication (170).

6. Procédé selon l'une quelconque des revendications 1 à 5, **caractérisé en ce que** le premier dispositif inclut un module matériel de sécurité (HSM), fournisseur du secret, et le second dispositif inclut un module client (M), destinataire du secret, supposé s'authentifier auprès dudit module matériel de sécurité.

7. Procédé d'utilisation par un second dispositif d'un secret (S) reçu en provenance d'un premier dispositif, le secret étant reçu par le second dispositif (D2, M, 110) sous forme chiffrée grâce à une clef de chiffrement symétrique, le second dispositif étant supposé stocker un logiciel prédéfini, **caractérisé en ce que** le second dispositif effectue les étapes suivantes :
- recevoir (501), en plus du secret sous forme chiffrée, une liste d'adresses aléatoires (L@) parmi un ensemble d'adresses correspondant au logiciel que le second dispositif est supposé stocker, et récupérer le contenu des adresses aléatoires de ladite liste, en utilisant le logiciel effectivement stocké (SW¹, SW') par le second dispositif ;
- calculer (502) la clef de chiffrement symétrique, en appliquant une fonction de hachage prédéfinie sur le contenu récupéré ; et
- récupérer (503) le secret, en déchiffrant grâce à la clef de chiffrement calculée le secret reçu sous forme chiffrée.

8. Procédé selon la revendication 7, **caractérisé en ce que** la liste d'adresses aléatoires (L@) contient en outre d'autres adresses aléatoires correspondant à des zones mémoire où le second dispositif (D2, M, 110) est supposé stocker des données prédictibles, et **en ce que** la clef de chiffrement symétrique est calculée en appliquant la fonction de hachage prédéfinie en outre sur le contenu récupéré à ces dites autres adresses aléatoires.

9. Procédé selon l'une quelconque des revendications 7 et 8, **caractérisé en ce que** le second dispositif (D2, M, 110) reçoit en outre un aléa (X) en provenance du premier dispositif (D1, HSM, 150), et **en ce que** le second dispositif calcule la clef de chiffrement symétrique, en appliquant (502) en outre la fonction de hachage prédéfinie sur l'aléa.

10. Procédé selon l'une quelconque des revendications 7 à 9, **caractérisé en ce que** le premier dispositif est un serveur (150), dit serveur de contrôle, connecté par un premier lien de communication (160) à un autre serveur, dit serveur de production, qui sert de relais avec le second dispositif qui est un terminal (110) que le serveur de production doit configurer grâce à un second lien de communication (170).

11. Procédé selon l'une quelconque des revendications 7 à 9, **caractérisé en ce que** le premier dispositif inclut un module matériel de sécurité (HSM), fournisseur du secret, et le second dispositif inclut un module client (M), destinataire du secret, supposé s'authentifier auprès dudit module matériel de sécurité.

12. Procédé selon la revendication 11, **caractérisé en ce que** le second dispositif retourne le secret déchiffré à destination du premier dispositif.

13. Procédé selon la revendication 11, **caractérisé en ce que** le second dispositif applique une fonction prédéfinie sur le secret déchiffré afin d'obtenir un secret modifié et transmet le secret modifié à destination du premier dispositif.

14. Procédé de partage d'un secret (S) par un premier dispositif (D1, HSM, 150) avec un second dispositif (D2, M, 110), **caractérisé en ce que** le premier dispositif implémente le procédé selon l'une des revendications 1, 2, 3, 5, et 6, et **en ce que** le second dispositif implémente respectivement le procédé selon l'une des revendications 7, 8, 9, 10, et 11.

15. Produit programme d'ordinateur, **caractérisé en ce qu'**il comporte des instructions entraînant l'exécution par un dispositif du procédé selon l'une quelconque des revendications 1 à 6 ou selon l'une quelconque des revendications 7 à 13, lorsque lesdites instructions sont exécutées par un processeur dudit dispositif.

16. Support de stockage, **caractérisé en ce qu'**il stocke un programme d'ordinateur comportant des instructions entraînant l'exécution par un dispositif du procédé selon l'une quelconque des revendications 1 à 6 ou selon l'une quelconque des revendications 7 à 13, lorsque lesdites instructions sont exécutées par un processeur dudit dispositif.

17. Dispositif (D1, HSM, 150), dit premier dispositif, configuré pour partager un secret (S) avec un second dispositif (D2, M, 110), le premier dispositif comportant des moyens pour transmettre (305) le secret à destination du second dispositif sous forme chiffrée grâce à une clef de chiffrement symétrique, le second dispositif étant supposé stocker un logiciel prédéfini, **caractérisé en ce que** le premier dispositif comporte :
- des moyens pour obtenir (301) une liste d'adresses aléatoires parmi un ensemble d'adresses correspondant au logiciel que le second dispositif est supposé stocker et pour récupérer le contenu supposé des adresses aléatoires de ladite liste, en utilisant un logiciel de référence (SW) correspondant au logiciel que le second dispositif est supposé stocker ;
- des moyens pour calculer (303) la clef de chiffrement symétrique, en appliquant une fonction de hachage prédéfinie sur le contenu récupéré ; et
- des moyens pour transmettre (305) à destination du second dispositif, en plus du secret chiffré (304) grâce à la clef de chiffrement calculée, la liste d'adresses aléatoires.

18. Dispositif (D2, M, 110), dit second dispositif, configuré pour utiliser un secret (S) reçu en provenance d'un premier dispositif (D1, HSM, 150), le secret étant reçu par le second dispositif sous forme chiffrée grâce à une clef de chiffrement symétrique, le second dispositif étant supposé stocker un logiciel prédéfini, **caractérisé en ce que** le second dispositif comporte :
- des moyens pour recevoir (501), en plus du secret sous forme chiffrée, une liste d'adresses aléatoires (L@) parmi un ensemble d'adresses correspondant au logiciel que le second dispositif est supposé stocker, et pour récupérer le contenu des adresses aléatoires de ladite liste, en utilisant le logiciel (SW¹, SW') effectivement stocké par le second dispositif ;
- des moyens pour calculer (502) la clef de chiffrement symétrique, en appliquant une fonction de hachage prédéfinie sur le contenu récupéré ; et
- des moyens pour récupérer (503) le secret, en déchiffrant grâce à la clef de chiffrement calculée le secret reçu sous forme chiffrée.

19. Système comportant un premier dispositif selon la revendication 17 et un second dispositif selon la revendication 18.

## Patentansprüche

1. Verfahren zum Teilen eines Geheimnisses (S) zwischen einer ersten Vorrichtung (D1, HSM, 150) und einer zweiten Vorrichtung (D2, M, 110), wobei das Geheimnis dank eines symmetrischen Verschlüsselungsschlüssels in verschlüsselter Form von der ersten Vorrichtung an die zweite Vorrichtung übertragen wird, wobei die zweite Vorrichtung vermutlich eine vordefinierte Software speichert, **dadurch gekennzeichnet, dass** die erste Vorrichtung die folgenden Schritte ausführt:
- Erhalt (301) einer Liste von Zufallsadressen (L@) unter einer Einheit von Adressen entsprechend der Software, die die zweite Vorrichtung vermutlich speichert, und Wiedergewinnen des vermuteten Inhalts der Zufallsadressen der Liste, unter Verwendung einer Bezugs-Software (SW) entsprechend der Software, die die zweite Vorrichtung vermutlich speichert;
- Berechnen (303) des symmetrischen Verschlüsselungsschlüssels unter Anwendung einer vordefinierten Hashfunktion an den wiedergewonnenen Inhalt; und
- Übertragen (305) der Liste von Zufallsadressen an die zweite Vorrichtung zusätzlich zum durch den berechneten Verschlüsselungsschlüssel verschlüsselten Geheimnis (304).

2. Verfahren nach Anspruch 1, **dadurch gekennzeichnet, dass** die Liste von Zufallsadressen (L@) außerdem andere Zufallsadressen enthält, die Speicherbereichen entsprechen, in denen die zweite Vorrichtung (D2, M, 110) vermutlich prädiktive Daten speichert, dass die erste Vorrichtung (D1, HSM, 150) den Inhalt der anderen Zufallsadressen durch Prädiktion wiedergewinnt, und dass der symmetrische Verschlüsselungsschlüssel berechnet wird, indem die vordefinierte Hashfunktion außerdem an den an diesen anderen Zufallsadressen wiedergewonnenen Inhalt angewendet wird.

3. Verfahren nach einem der Ansprüche 1 und 2, **dadurch gekennzeichnet, dass** die erste Vorrichtung (D1, HSM, 150) den symmetrischen Verschlüsselungsschlüssel berechnet, indem sie außerdem die vordefinierte Hashfunktion an eine Zufälligkeit anwendet, und dass die erste Vorrichtung die Zufälligkeit an die zweite Vorrichtung überträgt (305).

4. Verfahren nach einem der Ansprüche 1 bis 3, **dadurch gekennzeichnet, dass** die erste Vorrichtung (D1, HSM, 150) die Liste von Zufallsadressen durch Zufallsziehung unter einer Teileinheit von allen Adressen entsprechend der Software erhält, die die zweite Vorrichtung (D2, M, 110) vermutlich speichert.

5. Verfahren nach einem der Ansprüche 1 bis 4, **dadurch gekennzeichnet, dass** die erste Vorrichtung ein Kontrollserver genannter Server (150) ist, der durch eine erste Kommunikationsverknüpfung (160) mit einem anderen Produktionsserver genannten Server (100) verbunden ist, der als Relais mit der zweiten Vorrichtung dient, die ein Endgerät (110) ist, das der Produktionsserver mit Hilfe einer zweiten Kommunikationsverknüpfung (170) konfigurieren soll.

6. Verfahren nach einem der Ansprüche 1 bis 5, **dadurch gekennzeichnet, dass** die erste Vorrichtung ein Sicherheits-Hardwaremodul (HSM) umfasst, das das Geheimnis liefert, und die zweite Vorrichtung ein Client-Modul (M) umfasst, für das das Geheimnis bestimmt ist, das sich beim Sicherheits-Hardwaremodul authentifizieren soll.

7. Verfahren zur Verwendung durch eine zweite Vorrichtung eines Geheimnisses (S), das von einer ersten Vorrichtung kommend empfangen wird, wobei das Geheimnis von der zweiten Vorrichtung (D2, M, 110) in dank eines symmetrischen Verschlüsselungsschlüssels verschlüsselter Form empfangen wird, wobei die zweite Vorrichtung vermutlich eine vordefinierte Software speichert, **dadurch gekennzeichnet, dass** die zweite Vorrichtung die folgenden Schritte ausführt:
- Empfang (501), zusätzlich zum Geheimnis in verschlüsselter Form, einer Liste von Zufallsadressen (L@) unter einer Einheit von Adressen entsprechend der Software, die die zweite Vorrichtung vermutlich speichert, und Wiedergewinnung des Inhalts der Zufallsadressen der Liste unter Verwendung der tatsächlich durch die zweite Vorrichtung gespeicherten Software (SW¹, SW');
- Berechnung (502) des symmetrischen Verschlüsselungsschlüssels durch Anwendung einer vordefinierten Hashfunktion an den wiedergewonnenen Inhalt; und
- Wiedergewinnung (503) des Geheimnisses durch Entschlüsselung des in verschlüsselter Form empfangenen Geheimnisses dank des berechneten Verschlüsselungsschlüssels.

8. Verfahren nach Anspruch 7, **dadurch gekennzeichnet, dass** die Liste von Zufallsadressen (L@) außerdem andere Zufallsadressen enthält, die Speicherbereichen entsprechen, in denen die zweite Vorrichtung (D2, M, 110) vermutlich prädiktive Daten speichert, und dass der symmetrische Verschlüsselungsschlüssel berechnet wird, indem die vordefinierte Hashfunktion außerdem an den an diesen anderen Zufallsadressen wiedergewonnenen Inhalt angewendet wird.

9. Verfahren nach einem der Ansprüche 7 und 8, **dadurch gekennzeichnet, dass** die zweite Vorrichtung (D2, M, 110) außerdem eine Zufälligkeit (X) von der ersten Vorrichtung (D1, HSM, 150) empfängt, und dass die zweite Vorrichtung den symmetrischen Verschlüsselungsschlüssel berechnet, indem sie außerdem die vordefinierte Hashfunktion an die Zufälligkeit anwendet (502).

10. Verfahren nach einem der Ansprüche 7 bis 9, **dadurch gekennzeichnet, dass** die erste Vorrichtung ein Kontrollserver genannter Server (150) ist, der durch eine erste Kommunikationsverknüpfung (160) mit einem anderen Produktionsserver genannten Server verbunden ist, der als Relais mit der zweiten Vorrichtung dient, die ein Endgerät (110) ist, das der Produktionsserver dank einer zweiten Kommunikationsverknüpfung (170) konfigurieren soll.

11. Verfahren nach einem der Ansprüche 7 bis 9, **dadurch gekennzeichnet, dass** die erste Vorrichtung ein Sicherheits-Hardwaremodul (HSM) umfasst, das das Geheimnis liefert, und die zweite Vorrichtung ein Client-Modul (M) umfasst, für das das Geheimnis bestimmt ist, das sich vermutlich beim Sicherheits-Hardwaremodul authentifiziert.

12. Verfahren nach Anspruch 11, **dadurch gekennzeichnet, dass** die zweite Vorrichtung das entschlüsselte Geheimnis an die erste Vorrichtung zurückschickt.

13. Verfahren nach Anspruch 11, **dadurch gekennzeichnet, dass** die zweite Vorrichtung eine vordefinierte Funktion an das entschlüsselte Geheimnis anwendet, um ein verändertes Geheimnis zu erhalten, und das veränderte Geheimnis an die erste Vorrichtung überträgt.

14. Verfahren zum Teilen eines Geheimnisses (S) zwischen einer ersten Vorrichtung (D1, HSM, 150) und einer zweiten Vorrichtung (D2, M, 110), **dadurch gekennzeichnet, dass** die erste Vorrichtung das Verfahren nach einem der Ansprüche 1, 2, 3, 5 und 6 ausführt, und dass die zweite Vorrichtung das Verfahren nach einem der Ansprüche 7, 8, 9, 10 und 11 ausführt.

15. Computerprogrammprodukt, **dadurch gekennzeichnet, dass** es Anweisungen aufweist, die die Ausführung des Verfahrens nach einem der Ansprüche 1 bis 6 oder nach einem der Ansprüche 7 bis 13 durch eine Vorrichtung herbeiführen, wenn die Anweisungen von einem Prozessor der Vorrichtung ausgeführt werden.

16. Speicherträger, **dadurch gekennzeichnet, dass** er ein Computerprogramm speichert, das Anweisungen aufweist, die die Ausführung des Verfahrens nach einem der Ansprüche 1 bis 6 oder nach einem der Ansprüche 7 bis 13 durch eine Vorrichtung herbeiführen, wenn die Anweisungen von einem Prozessor der Vorrichtung ausgeführt werden.

17. Vorrichtung (D1, HSM, 150), erste Vorrichtung genannt, die konfiguriert ist, ein Geheimnis (S) mit einer zweiten Vorrichtung (D2, M, 110) zu teilen, wobei die erste Vorrichtung Einrichtungen aufweist, um das Geheimnis in dank eines symmetrischen Verschlüsselungsschlüssels verschlüsselter Form an die zweite Vorrichtung zu übertragen (305), wobei die zweite Vorrichtung vermutlich eine vordefinierte Software speichert, **dadurch gekennzeichnet, dass** die erste Vorrichtung aufweist:
- Einrichtungen zum Erhalt (301) einer Liste von Zufallsadressen unter einer Einheit von Adressen entsprechend der Software, die die zweite Vorrichtung vermutlich speichert, und zur Wiedergewinnung des vermutlichen Inhalts der Zufallsadressen der Liste unter Verwendung einer Bezugs-Software (SW), die der Software entspricht, die die zweite Vorrichtung vermutlich speichert;
- Einrichtungen zur Berechnung (303) des symmetrischen Verschlüsselungsschlüssels unter Anwendung einer vordefinierten Hashfunktion an den wiedergewonnenen Inhalt; und
- Einrichtungen zur Übertragung (305) der Liste von Zufallsadressen zusätzlich zum durch den berechneten Verschlüsselungsschlüssel verschlüsselten Geheimnis (304) an die zweite Vorrichtung.

18. Vorrichtung (D2, M, 110), zweite Vorrichtung genannt, die konfiguriert ist, ein von einer ersten Vorrichtung (D1, HSM, 150) kommendes empfangenes Geheimnis (S) zu verwenden, wobei das Geheimnis von der zweiten Vorrichtung in dank eines symmetrischen Verschlüsselungsschlüssels verschlüsselter Form empfangen wird, wobei die zweite Vorrichtung vermutlich eine vordefinierte Software speichert, **dadurch gekennzeichnet, dass** die zweite Vorrichtung aufweist:
- Einrichtungen zum Empfang (501), zusätzlich zum Geheimnis in verschlüsselter Form, einer Liste von Zufallsadressen (L@) unter einer Einheit von Adressen entsprechend der Software, die die zweite Vorrichtung vermutlich speichert, und um den Inhalt der Zufallsadressen der Liste unter Verwendung der Software (SW¹, SW') wiederzugewinnen, die tatsächlich von der zweiten Vorrichtung gespeichert wird;
- Einrichtungen zur Berechnung (502) des symmetrischen Verschlüsselungsschlüssels durch Anwenden einer vordefinierten Hashfunktion an den wiedergewonnenen Inhalt; und
- Einrichtungen zur Wiedergewinnung (503) des Geheimnisses durch Entschlüsseln des in verschlüsselter Form empfangenen Geheimnisses dank des berechneten Verschlüsselungsschlüssels.

19. System, das eine erste Vorrichtung nach Anspruch 17 und eine zweite Vorrichtung nach Anspruch 18 aufweist.

## Claims

1. Method by which a first device (D1, HSM, 150) shares a secret (S) with a second device (D2, M, 110), the secret being transmitted by the first device to the second device in a form encrypted by means of a symmetric encryption key, the second device being supposed to store a predefined piece of software, **characterized in that** the first device performs the following steps:
- obtaining (301) a list of random addresses (L@) from among a set of addresses corresponding to the piece of software that the second device is supposed to store and retrieving the supposed content of the random addresses on said list by using a reference piece of software (SW) corresponding to the piece of software that the second device is supposed to store;
- computing (303) the symmetric encryption key by applying a predefined hash function to the retrieved content; and
- transmitting (305) the list of random addresses to the second device in addition to the secret encrypted (304) by means of the computed encryption key.

2. Method according to Claim 1, **characterized in that** the list of random addresses (L@) additionally contains other random addresses corresponding to memory areas in which the second device (D2, M, 110) is supposed to store predictable data, **in that** the first device (D1, HSM, 150) retrieves the content of said other random addresses by prediction, and **in that** the symmetric encryption key is computed by additionally applying the predefined hash function to the content retrieved at said other random addresses.

3. Method according to any one of Claims 1 and 2, **characterized in that** the first device (D1, HSM, 150) computes the symmetric encryption key by additionally applying the predefined hash function to a random number, and **in that** the first device transmits (305) the random number to the second device.

4. Method according to any one of Claims 1 to 3, **characterized in that** the first device (D1, HSM, 150) obtains the list of random addresses by random drawing from among a subset of all the addresses corresponding to the piece of software that the second device (D2, M, 110) is supposed to store.

5. Method according to any one of Claims 1 to 4, **characterized in that** the first device is a server (150), known as the control server, which is connected by a first communication link (160) to another server (100), known as the production server, which functions as a relay to the second device, which is a terminal (110) that the production server has to configure by means of a second communication link (170).

6. Method according to any one of Claims 1 to 5, **characterized in that** the first device includes a hardware security module (HSM), which supplies the secret, and the second device includes a client module (M), which is the recipient of the secret and is supposed to authenticate itself to said hardware security module.

7. Method by which a second device uses a secret (S) received from a first device, the secret being received by the second device (D2, M, 110) in a form encrypted by means of a symmetric encryption key, the second device being supposed to store a predefined piece of software, **characterized in that** the second device performs the following steps:
- receiving (501), in addition to the secret in encrypted form, a list of random addresses (L@) from among a set of addresses corresponding to the piece of software that the second device is supposed to store and retrieving the content of the random addresses on said list by using the piece of software (SW¹, SW') that is in fact stored by the second device;
- computing (502) the symmetric encryption key by applying a predefined hash function to the retrieved content; and
- retrieving (503) the secret by decrypting, by means of the computed encryption key, the secret received in encrypted form.

8. Method according to Claim 7, **characterized in that** the list of random addresses (L@) additionally contains other random addresses corresponding to memory areas in which the second device (D2, M, 110) is supposed to store predictable data, and **in that** the symmetric encryption key is computed by additionally applying the predefined hash function to the content retrieved at said other random addresses.

9. Method according to any one of Claims 7 and 8, **characterized in that** the second device (D2, M, 110) additionally receives a random number (X) from the first device (D1, HSM, 150), and **in that** the second device computes the symmetric encryption key by additionally applying (502) the predefined hash function to the random number.

10. Method according to any one of Claims 7 to 9, **characterized in that** the first device is a server (150), known as the control server, which is connected by a first communication link (160) to another server, known as the production server, which functions as a relay to the second device, which is a terminal (110) that the production server has to configure by means of a second communication link (170).

11. Method according to any one of Claims 7 to 9, **characterized in that** the first device includes a hardware security module (HSM), which supplies the secret, and the second device includes a client module (M), which is the recipient of the secret and is supposed to authenticate itself to said hardware security module.

12. Method according to Claim 11, **characterized in that** the second device returns the decrypted secret to the first device.

13. Method according to Claim 11, **characterized in that** the second device applies a predefined function to the decrypted secret in order to obtain a modified secret and transmits the modified secret to the first device.

14. Method by which a first device (D1, HSM, 150)shares a secret (S) with a second device (D2, M, 110), **characterized in that** the first device implements the method according to one of Claims 1, 2, 3, 5 and 6, and **in that** the second device implements the method according to one of Claims 7, 8, 9, 10 and 11, respectively.

15. Computer program product, **characterized in that** it has instructions causing a device to carry out the method according to any one of Claims 1 to 6 or according to any one of Claims 7 to 13, when said instructions are executed by a processor of said device.

16. Storage medium, **characterized in that** it stores a computer program having instructions causing a device to carry out the method according to any one of Claims 1 to 6 or according to any one of Claims 7 to 13, when said instructions are executed by a processor of said device.

17. Device (D1, HSM, 150), known as the first device, configured to share a secret (S) with a second device (D2, M, 110), the first device having means for transmitting (305) the secret to the second device in a form encrypted by means of a symmetric encryption key, the second device being supposed to store a predefined piece of software, **characterized in that** the first device has:
- means for obtaining (301) a list of random addresses from among a set of addresses corresponding to the piece of software that the second device is supposed to store and for retrieving the supposed content of the random addresses on said list by using a reference piece of software (SW) corresponding to the piece of software that the second device is supposed to store;
- means for computing (303) the symmetric encryption key by applying a predefined hash function to the retrieved content; and
- means for transmitting (305) the list of random addresses to the second device in addition to the secret encrypted (304) by means of the computed encryption key.

18. Device (D2, M, 110), known as the second device, configured to use a secret (S) received from a first device (D1, HSM, 150), the secret being received by the second device in a form encrypted by means of a symmetric encryption key, the second device being supposed to store a predefined piece of software, **characterized in that** the second device has:
- means for receiving (501), in addition to the secret in encrypted form, a list of random addresses (L@) from among a set of addresses corresponding to the piece of software that the second device is supposed to store and for retrieving the content of the random addresses on said list by using the piece of software (SW¹, SW') that is in fact stored by the second device;
- means for computing (502) the symmetric encryption key by applying a predefined hash function to the retrieved content; and
- means for retrieving (503) the secret by decrypting, by means of the computed encryption key, the secret received in encrypted form.

19. System having a first device according to Claim 17 and a second device according to Claim 18.
